(19) Europäisches Patentamt
European Patent Office
Office européen des brevets

(11) **EP 4 553 461 B1**

(12) **EUROPÄISCHE PATENTSCHRIFT**

(45) Veröffentlichungstag und Bekanntmachung des Hinweises auf die Patenterteilung:
**25.02.2026 Patentblatt 2026/09**

(21) Anmeldenummer: **24211701.8**

(22) Anmeldetag: **08.11.2024**

(51) Internationale Patentklassifikation (IPC):
**G01F 23/284** (2006.01)   **G01S 13/88** (2006.01)
**G01S 13/10** (2006.01)   *G01F 23/80* (2022.01)
*G01N 22/00* (2006.01)   *G01N 27/02* (2006.01)

(52) Gemeinsame Patentklassifikation (CPC):
**G01F 23/284; G01S 13/10; G01S 13/88;**
G01F 23/804; G01N 27/02

(54) **VERFAHREN ZUM BETREIBEN EINES TDR-FÜLLSTANDMESSGERÄTS UND TDR-FÜLLSTANDMESSGERÄT**

METHOD OF OPERATING A TDR FILLING LEVEL MEASURING DEVICE AND TDR FILLING LEVEL MEASURING DEVICE

PROCÉDÉ DE FONCTIONNEMENT D'UN APPAREIL DE MESURE DE NIVEAU DE REMPLISSAGE DU TYPE TDR ET APPAREIL DE MESURE DE NIVEAU DE REMPLISSAGE DU TYPE TDR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **09.11.2023 DE 102023131085**

(43) Veröffentlichungstag der Anmeldung:
**14.05.2025 Patentblatt 2025/20**

(73) Patentinhaber: **Krohne S.A.S.**
**26103 Romans-sur-Isère Cedex (FR)**

(72) Erfinder:
• **Grosdidier, Samuel**
**26300 Beauregard-Baret (FR)**
• **Marcel, Fabrice**
**07130 Saint Péray (FR)**

(74) Vertreter: **Gesthuysen Patentanwälte**
**Partnerschaftsgesellschaft mbB**
**Huyssenallee 68**
**45128 Essen (DE)**

(56) Entgegenhaltungen:
DE-A1- 102017 108 702     US-A- 5 898 308
US-A1- 2011 094 299

**Beschreibung**

Die Erfindung geht aus von einem Verfahren zum Betreiben eines TDR-Füllstandmessgeräts, wobei das TDR-Füllstandmessgerät wenigstens eine Sonde zur Führung eines elektromagnetischen Signals und einen Messumformer aufweist, wobei der Messumformer eine Elektronikeinheit zur Erzeugung eines Messsignals und zur Auswertung eines reflektierten Messsignals und ein Prozessanschlusselement aufweist,

wobei der Messumformer über das Prozessanschlusselement an einen Behälter angeschlossen ist, wobei in dem Behälter zu vermessendes Prozessmedium angeordnet ist und wobei oberhalb des Prozessmediums ein gasförmiges Medium angeordnet ist,

wobei mittels Erfassen und Auswerten der Amplitude $A_S$ eines von der Elektronikeinheit ausgesendeten Messsignals und der Amplitude $A_R$ eines an der Grenzfläche des Prozessanschlusselementes und dem Behälter reflektierten Messsignals die relative Permittivität $\varepsilon_r$ des gasförmigen Mediums bestimmt wird.

Darüber hinaus betrifft die Erfindung ein TDR-Füllstandmessgerät mit wenigstens einer Sonde zur Führung eines elektromagnetischen Signals und mit einem Messumformer,

wobei der Messumformer eine Elektronikeinheit zur Erzeugung eines Messsignals und zur Auswertung eines reflektierten Messsignals und ein Prozessanschlusselement aufweist,

wobei der Messumformer über das Prozessanschlusselement an einen Behälter angeschlossen werden kann.

TDR-Füllstandmessgeräte zur Messung des Füllstandes eines in einem Behälter angeordneten Prozessmediums sind aus dem Stand der Technik gut bekannt.

Bekannte TDR-Füllstandmessgeräte beruhen auf der Laufzeitmessung eines Messsignals, das über die Sonde in Richtung des Prozessmediums geführt wird und an der Grenzfläche zum Prozessmedium reflektiert wird. Aus der Laufzeit kann der Abstand zwischen dem, meist flanschartig ausgebildeten, Prozessanschluss und der Prozessmediumsoberfläche und damit der Füllstand im Behälter bestimmt werden.

Zur Verbesserung der Genauigkeit der Laufzeitmessung und insofern zur Optimierung der Füllstandbestimmung ist die Kenntnis der Ausbreitungsgeschwindigkeit des Messsignals, das sich entlang der Sonde bewegt, von entscheidender Bedeutung. Ist das oberhalb des Prozessmediums angeordnete gasförmige Medium von Luft verschieden, so beeinflusst dies ebenfalls die Ausbreitungsgeschwindigkeit des Messsignals, das sich entlang der Sonde durch das gasförmige Medium bewegt.

Aus dem Stand der Technik DE 10 2017 108 702 A1 ist es bekannt, die relative Permittivität $\varepsilon_r$ eines gasförmigen Mediums, das oberhalb des Prozessmediums angeordnet ist, zu bestimmen.

Ausgehend von dem dargelegten Stand der Technik ist es Aufgabe der Erfindung, ein Verfahren zum Betreiben eines TDR-Füllstandmessgeräts anzugeben, das die Laufzeitbestimmung verbessert. Zudem ist es Aufgabe der Erfindung, ein entsprechendes TDR-Füllstandmessgerät zur Durchführung des erfindungsgemäßen Verfahrens anzugeben.

Gemäß einer ersten Lehre der vorliegenden Erfindung wird die zuvor genannte Aufgabe durch ein eingangs beschriebenes Verfahren dadurch gelöst,

dass zur Bestimmung der relativen Permittivität $\varepsilon_r$ die Abschwächung $\alpha_0$ des ausgesendeten Messsignals durch den Messumformer berücksichtigt wird, wobei zur Bestimmung der Abschwächung $\alpha_0$ die Abschwächung $\alpha_e$ durch die Elektronikeinheit und die mechanische Abschwächung $\alpha_m$ durch das Prozessanschlusselement bestimmt werden, und/oder

dass zur Bestimmung der relativen Permittivität $\varepsilon_r$ das Impedanzverhältnis $IFR_0 = Z_{0\_Sonde}/Z_{MU}$ berücksichtigt wird, wobei $Z_{0\_Sonde}$ die Impedanz der Sonde im Vakuum und $Z_{MU}$ die Impedanz des Messumformers ist und wobei das Impedanzverhältnis $IFR_0$ in einem Referenzgas mit bekannter Permittivität $\varepsilon_r$ bestimmt wird.

Gemäß einer vorteilhaften Ausgestaltung der Erfindung wird die Bestimmung der Abschwächung $\alpha_0$ des Messsignals im Messumformer unterteilt in die Bestimmung der Abschwächung $\alpha_e$ durch die Elektronikeinheit und der mechanischen Abschwächung $\alpha_m$ durch das Prozessanschlusselement.

Dieses Vorgehen stellt einen einfachen Weg der Bestimmung der Gesamtabschwächung $\alpha_0$ des Messsignals durch den Messumformer dar.

Gemäß einer bevorzugten Ausgestaltung wird die Abschwächung $\alpha_e$ gemessen, wobei zur Messung der

Abschwächung $\alpha_e$ ein Reflektorelement, beispielsweise ein Widerstand, ein Kurzschluss oder ein offenes Ende, an den Ausgang der Elektronikeinheit platziert wird und wobei $\alpha_e$ durch den Vergleich der Amplitude eines von der Elektronikeinheit ausgesendeten Messsignals $A_{eS}$ und eines an dem Reflektorelement reflektierten Messsignals $A_{eR}$ bestimmt wird. Wichtig für die Bestimmung der Abschwächung des Messsignals ist, dass der Reflexionsfaktor des Reflektorelements bekannt ist.

Gemäß einer besonders bevorzugten Ausgestaltung wird die Signalleitung der Elektronikeinheit, über die das erzeugte Messsignal übertragen wird, zur Bestimmung von $\alpha_e$ mit einem Kabel, beispielsweise mit einem Koaxialkabel, verlängert. Die Abschwächung $\alpha_e$ wird unter Berücksichtigung der Beeinflussung des Messsignals durch das zusätzliche Kabel bestimmt.

Insbesondere wird ebenfalls der Widerstand des Reflektorelements und/oder die Impedanz des zusätzlichen Kabels und/oder die Abschwächung durch das zusätzliche Kabel berücksichtigt.

Besonders bevorzugt wird $\alpha_e$ gemäß folgender Formel bestimmt:

$$\alpha_e = \frac{A_{eR}}{A_{eS} \cdot \alpha_{Kabel}},$$

wobei $A_{eR}$ die Amplitude des reflektierten Signals ist, wobei $A_{eS}$ die Amplitude des ausgesendeten Messsignals ist und wobei $\alpha_{Kabel}$ die durch das Kabel verursachte Abschwächung ist.

Diese Ausgestaltung weist insgesamt den Vorteil auf, dass die Laufzeit des reflektierten Pulses verlängert werden kann, sodass der reflektierte Puls von dem von der Elektronikeinheit ausgesendeten Messsignal gut unterschieden werden kann und sich insbesondere nicht mit diesem überlagert.

Die Abschwächung $\alpha_e$ wird vorzugsweise während der Herstellung bzw. der Montage des Messumformers gemessen. Der gemessene Wert $\alpha_e$ ist charakterisierend für den einzelnen Messumformer und wird vorzugsweise in der Elektronikeinheit hinterlegt. Gemäß einer nächsten vorteilhaften Ausgestaltung weist die Elektronikeinheit einen Temperatursensor auf, der die Temperatur der Elektronikeinheit erfasst. Während der Bestimmung der Abschwächung des Signals durch die Elektronikeinheit wird gemäß einer besonders bevorzugten Ausgestaltung ebenfalls die Temperaturabhängigkeit der Abschwächung bestimmt.

Die mechanische Abschwächung $\alpha_m$ entspricht gemäß einer Ausgestaltung des Verfahrens einem Durchschnittswert für das verwendete Prozessanschlusselement.

Ein solcher Durchschnittswert kann beispielsweise vorab für eine Vielzahl von unterschiedlichen Prozessanschlusselementen bestimmt werden.

Bei der Bestimmung der mechanischen Abschwächung kann gemäß einer Ausgestaltung wie folgt vorgegangen werden:

Unter der Annahme, dass die Abschwächung durch die das Signal erzeugende Elektronikeinheit bekannt ist, wird das Prozessanschlusselement entweder in Ausbreitungsrichtung des Signals vor oder hinter dem Flansch kurzgeschlossen. Der Flansch kann Teil des Prozessanschlusselementes sein oder zwischen dem Prozessanschlusselement und dem Behälter angeordnet sein.

Wird das Prozessanschlusselement vor dem Flansch kurzgeschlossen, kann durch Erfassung eines reflektierten Pulses die Abschwächung durch das Prozessanschlusselement bestimmt werden.

Wird das Prozessanschlusselement hinter dem Flansch kurzgeschlossen, so wird ebenfalls die Reflexion an der Grenzfläche des Prozessanschlusselementes zum Flansch berücksichtigt. In diesem Fall lässt sich die mechanische Abschwächung nach folgender Formel bestimmen:

$$\alpha_m = \frac{A_{mR} - A_{par}}{A_{mS} \cdot \alpha_e},$$

wobei $A_{mR}$ die Amplitude des am Abschlusselement reflektierten Signals ist, wobei $A_{par}$ die Amplitude des an der Grenzfläche zum Flansch reflektierten Signals ist und wobei $A_{mS}$ die Amplitude des ausgesendeten Signals ist und wobei $\alpha_e$ die bekannte Abschwächung durch die Elektronikeinheit ist.

Besonders bevorzugt wird eine Mehrzahl von Prozessanschlusselementen mit den gleichen Eigenschaften vermessen und der Mittelwert für die Signalabschwächung $\alpha_m$ wird gebildet. Dieser Mittelwert wird vorzugsweise in der Elektronikeinheit hinterlegt.

Da die Abschwächung $\alpha_m$ für unterschiedliche Messgeräte nur geringen Schwankungen unterliegt, kann bei Kenntnis des Mittelwertes der Abschwächung $\alpha_m$ darauf verzichtet werden, $\alpha_m$ für jeden Messumformer individuell neu zu bestimmen.

Alternativ kann zur Bestimmung der Abschwächung $\alpha_m$ auch folgendermaßen vorgegangen werden:

Bei bekanntem $\alpha_e$ und bekannten Prozessbedingungen, insbesondere bekanntem Füllstand und bekannter Prozesstemperatur, kann zunächst ein Erwartungswert für $\alpha_m$ angenommen werden, wobei dieser Erwartungswert während der Messung des Füllstandes so lange variiert wird, bis der tatsächliche Füllstand gemessen wird.

Besonders bevorzugt ist ein Temperatursensor vorhanden, der die Temperatur des Prozessanschlusselementes erfasst. Bei Bestimmung des Mittelwertes für $\alpha_m$ kann dann ebenfalls die Temperaturabhängigkeit für die Abschwächung $\alpha_m$ bestimmt werden.

Denkbar ist ebenfalls, zur Bestimmung des Mittelwerts $\alpha_m$ ein Verlängerungselement, beispielsweise ein Verlängerungskabel, analog zur Bestimmung der Abschwächung durch die Elektronikeinheit zu verwenden. Auf diese Weise können der ausgesendete Puls und der reflektierte Puls zeitlich besonders gut unterschieden werden.

Beispielsweise ist das Prozessanschlusselement als Koaxialleiter oder Hohlleiter ausgebildet. Je nach Anwendung kann der Koaxialleiter unterschiedliche Dielektrika aufweisen. Das Prozessanschlusselement gewährleistet eine, insbesondere thermische, Isolierung der Elektronikeinheit von der Prozessumgebung.

Für den Anschluss an den Behälter weist das Prozessanschlusselement besonders bevorzugt einen Flansch auf.

Als mechanische Abschwächung $\alpha_m$ kann also für unterschiedliche Messumformer ein hinterlegter Wert benutzt werden. Es ist nicht notwendig den Wert der mechanischen Abschwächung $\alpha_m$ individuell für einzelne Messumformer gesondert zu messen. Die tatsächlichen Abweichungen von einem für den Typ Prozessanschlusselement bestimmten Mittelwert sind derart klein, dass sie vernachlässigt werden können.

Gemäß einer nächsten vorteilhaften Ausgestaltung wird zur Bestimmung der relativen Permittivität $\varepsilon_r$ des gasförmigen Mediums auch das Impedanzverhältnis $IFR_0 = Z_{0\_Sonde}/Z_{Mu}$ berücksichtigt, wobei $Z_{0\_Sonde}$ die Impedanz der Sonde im Vakuum und $Z_{MU}$ die Impedanz des Messumformers ist.

Das Impedanzverhältnis $IFR_0$ wird vorzugsweise in einem Referenzgas, insbesondere in Luft, bestimmt. Auch das Impedanzverhältnis ist eine Größe, die individuell für jeden Messumformer zumindest einmalig gemessen wird.

Ist das Referenzgas Luft, so kann das Impedanzverhältnis nach folgendem Zusammenhang bestimmt werden:

$$IFR_0 = \sqrt{\varepsilon_{r,Luft}} \cdot \frac{\alpha_0 + R}{\alpha_0 - R} = \frac{\alpha_0 + R}{\alpha_0 - R},$$

wobei $\varepsilon_{r,Luft}$ ungefähr 1 ist, wobei $\alpha_0$ die Abschwächung durch den Messumformer ist, und wobei R der Reflexionsfaktor ist, der aus dem Verhältnis der Amplituden eines von der Elektronikeinheit ausgesendeten Messsignals $A_S$ und der Amplitude $A_R$ eines an der Grenzfläche des Prozessanschlusselementes und dem Behälter reflektierten Messsignals ist, also

$$R = \frac{A_R}{A_S}.$$

Die Amplituden $A_S$ und $A_R$ werden zur Bestimmung des Impedanzverhältnisses in Luft gemessen.

Alternativ kann das Impedanzverhältnis $IFR_0$ auch in einem anderen Medium als Luft bestimmt werden, wobei die relative Permittitvität $\varepsilon_r$ des Mediums bekannt ist und wobei aus dem so bestimmten Impedanzverhältnis durch entsprechende Korrektur auf das Impedanzverhältnis $IFR_0$ geschlossen wird.

Das Impedanzverhältnis $IFR_0$ wird vorzugsweise in der Elektronikeinheit hinterlegt und zur Bestimmung der relativen Permittivität $\varepsilon_r$ des gasförmigen Mediums genutzt. Gemäß dieser Ausgestaltung ist es nicht notwendig, die Werte der einzelnen Impedanzen $Z_{0\_Sonde}$ und $Z_{MU}$ für jeden Messumformer neu zu bestimmen. Relevant ist lediglich das Impedanzverhältnis $IFR_0$.

Gemäß einer weiteren bevorzugten Ausgestaltung des erfindungsgemäßen Verfahrens wird die relative Permittivität des gasförmigen Mediums, das oberhalb des Prozessmediums im Behälter angeordnet ist, durch folgende Formel bestimmt:

$$\varepsilon_r = \left( \frac{Z_{0\_Sonde}}{Z_{MU}} \cdot \frac{\alpha_0 - \frac{A_R}{A_S}}{\alpha_0 + \frac{A_R}{A_S}} \right)^2 = \left( IFR_0 \cdot \frac{\alpha_0 - \frac{A_R}{A_S}}{\alpha_0 + \frac{A_R}{A_S}} \right)^2 .$$

Dabei ist vorzugsweise $\alpha_0 = \alpha_e \cdot \alpha_m$.

Gemäß einer weiteren Ausgestaltung des erfindungsgemäßen Verfahrens werden die Werte $\alpha_e$ und $\alpha_m$ bzw. $\alpha_0$ und $IFR_0$ in der Elektronikeinheit hinterlegt, sodass in regelmäßigen oder unregelmäßigen Abständen auch während des Messbetriebs die relative Permittivität $\varepsilon_r$ des gasförmigen Mediums oberhalb des Prozessmediums bestimmt oder überwacht werden kann.

Besonders bevorzugt wird die relative Permittivität $\varepsilon_r$ dauerhaft bestimmt und bei der Füllstandmessung berücksichtigt.

Ändert sich die relative Permittivität $\varepsilon_r$ während des Betriebs des TDR-Füllstandmessgeräts, kann die Ausbreitungsgeschwindigkeit des Messsignals, das sich durch das gasförmige Medium bewegt, angepasst werden.

Gemäß einer weiteren Ausgestaltung des Verfahrens ist ein weiterer Sensor, insbesondere ein Temperatursensor, vorhanden, der einen Prozessparameter, insbesondere die Temperatur, im Behälter misst. Besonders bevorzugt wird die relative Permittivität $\varepsilon_r$ dann neu bestimmt, wenn der Wert des Prozessparameters, insbesondere die Temperatur, im Behälter einen vorgegebenen Toleranzbereich überschreitet.

Das Verfahren weist damit den Vorteil auf, dass die Bestimmung der Laufzeit des Messsignals an Änderungen von Prozessparametern, wie beispielsweise der Temperatur oder auch der Zusammensetzung des gasförmigen Mediums angepasst werden kann, sodass die Bestimmung des Füllstandes des zu überwachenden Prozessmediums besonders genau erfolgt.

Gemäß einer nächsten vorteilhaften Ausgestaltung ist wenigstens ein Temperatursensor vorhanden, der die Temperatur der Elektronikeinheit und/oder des Prozessanschlusselementes bestimmt. Beispielsweise kann ein Temperatursensoe vorhanden sein, der sowohl die Temperatur der Elektronikeinheit als auch die Temperatur des Prozessanschlusselementes bestimmt. Es können aber auch zwei Temperatursensoren vorhanden sein, wobei ein Temperatursensor die Temperatur der Elektronikeinheit bestimmt und ein Temperatursensor die Temperatur des Prozessanschlusselementes bestimmt.

Ist wenigstens ein solcher Temperatursensor vorhanden, ist es besonders vorteilhaft, wenn im Betrieb die Temperatur von der Elektronikeinheit und/oder dem Prozessanschlusselement erfasst wird. Bei Änderungen der Temperatur der Elektronikeinheit und/oder des Prozessanschlusselementes werden die Werte für $\alpha_e$ bzw. $\alpha_m$ entsprechend dem hinterlegten Temperaturverhalten korrigiert.

Insofern ändert sich bei einem Temperaturdrift ebenfalls die Gesamtabschwächung $\alpha_0$. Durch die Anpassung von dem Wert der Abschwächung $\alpha_0$ an eine Temperaturänderung kann der Wert der relativen Permittivität $\varepsilon_r$ und damit die Ausbreitungsgeschwindigkeit des Messsignals durch das Medium besonders genau bestimmt werden.

Gemäß einer zweiten Lehre der vorliegenden Erfindung wird die eingangs dargelegte Aufgabe durch ein eingangs beschriebenes TDR-Füllstandmessgerät dadurch gelöst, dass die Elektronikeinheit zur Durchführung eines der zuvor beschriebenen Verfahren ausgebildet und eingerichtet ist. Hinsichtlich der Ausgestaltung des TDR-Füllstandmessgeräts wird ebenfalls auf sämtliche zuvor beschriebene Ausgestaltungen Bezug genommen.

Es gibt nun eine Vielzahl von Möglichkeiten das erfindungsgemäße Verfahren und das erfindungsgemäße TDR-Füllstandmessgerät auszugestalten und weiterzubilden. Dazu wird verwiesen auf die den unabhängigen Patentansprüchen nachgeordneten Patentansprüche sowie auf die nachfolgend beschriebenen Ausführungsbeispiele in Verbindung mit der Zeichnung.

In der Zeichnung zeigen

Fig. 1    ein Ausführungsbeispiel eines TDR-Füllstandmessgeräts,

Fig. 2    ein Ausführungsbeispiel eines Aufbaus zur Bestimmung der Abschwächung $\alpha_e$,

Fig. 3    ein Ausführungsbeispiel eines Verfahrens zur Bestimmung der relativen Permittivität des gasförmigen Mediums,

Fig. 4    ein Ausführungsbeispiel eines Verfahrens zur Bestimmung des Füllstands eines Prozessmediums in einem Behälter.

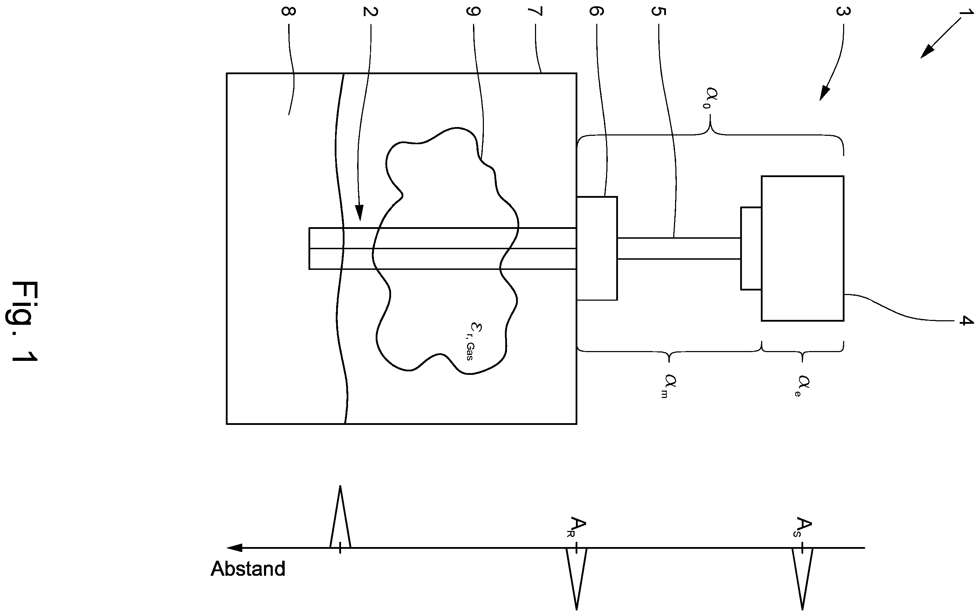

Fig. 1 zeigt ein Ausführungsbeispiel eines TDR-Füllstandmessgeräts 1 mit einer Sonde 2 zur Führung eines elektromagnetischen Signals und mit einem Messumformer 3.

Der Messumformer 3 umfasst eine Elektronikeinheit 4 zur Erzeugung eines Messsignals und zur Auswertung eines reflektierten Messsignals und ein Prozessanschlusselement 5, wobei der Messumformer 3 über das Prozessanschlusselement 5 mit einem Flansch 6 mit einem Behälter 7 verbunden ist.

Im dargestellten Ausführungsbeispiel ist das Prozessanschlusselement 5 als Hohlleiter ausgebildet. Denkbar ist ebenso, dass das Prozessanschlusselement 5 als Koaxialleiter ausgebildet ist.

In dem Behälter 7 ist ein Prozessmedium 8 angeordnet, dessen Füllstand durch das Füllstandmessgerät 1 bestimmt und/oder überwacht werden kann. Zur Bestimmung des Füllstandes sendet das Füllstandmessgerät 1 ein Messsignal aus, das sich entlang der Sonde 2 in Richtung des Prozessmediums 8 bewegt und an der Grenzfläche zum Prozessmedium reflektiert wird.

Aus der Laufzeit des reflektierten Messsignals wird der Abstand zwischen dem Flansch 6 und der Prozessmediumsoberfläche und daraus der Füllstand des Prozessmediums 8 im Behälter 7 bestimmt. Insofern ist es relevant, die genaue Ausbreitungsgeschwindigkeit, mit der sich das Messsignal entlang der Sonde 2 bewegt, zu kennen.

Ist das gasförmige Medium 9 oberhalb des Prozessmediums 8 von Luft verschieden oder ändert sich die Temperatur im Behälter 7, ist also die relative Permittivität $\varepsilon_r$ größer 1, verringert sich die Ausbreitungsgeschwindigkeit des Messsignals.

Die Elektronikeinheit 4 ist daher derart ausgebildet und eingerichtet, dass sie die relative Permittivität $\varepsilon_r$ des gasförmigen Mediums, das im Behälter 7 oberhalb des Prozessmediums angeordnet ist, bestimmt.

Im Betrieb bestimmt die Elektronikeinheit 4 die relative Permittivität $\varepsilon_r$ aus dem gemessenen Verhältnis der Amplitude $A_S$ eines von der Elektronikeinheit 4 ausgesendeten Messsignals und der Amplitude $A_R$ eines an der Grenzfläche des Prozessanschlusselementes und dem Behälter 7 reflektierten Messsignals.

Weiterhin berücksichtigt die Elektronikeinheit 4 die Abschwächung $\alpha_0$ des Messsignals im Bereich des Messumformers 3 und das Impedanzverhältnis $IFR_0$ der Impedanz der Sonde $Z_{0\_Sonde}$ und der Impedanz des Messumformers $Z_{MU}$.

Das Impedanzverhältnis $IFR_0$ ist für das dargestellte TDR-Füllstandmessgerät in einem leeren Behälter 7, also in Luft, bestimmt worden und in der Elektronikeinheit 4 hinterlegt.

Die Abschwächung $\alpha_0$ setzt sich zusammen aus der Abschwächung $\alpha_e$ durch die Elektronikeinheit 4 und der mechanischen Abschwächung $\alpha_m$ durch das Prozessanschlusselement 5.

Zur Bestimmung der Abschwächung $\alpha_0$ wurde die Abschwächung $\alpha_e$ durch die Elektronikeinheit 4 während der Herstellung also der Montage des Messumformers 3 gemessen. Der Wert der mechanischen Abschwächung $\alpha_m$ ist für das verwendete Prozessanschlusselement 5 gut bekannt und entspricht einem für den dargestellten Typ Prozessanschlusselement Durchschnittswert.

Der Wert der auf diese Weise bestimmten Abschwächung $\alpha_0$ ist im dargestellten Ausführungsbeispiel in der Elektronikeinheit 4 hinterlegt.

Insofern kann das dargestellte TDR-Füllstandmessgerät 1 während des Betriebs dauerhaft oder in regelmäßigen oder unregelmäßigen Abständen die aktuelle Permittivität $\varepsilon_r$ bestimmen und bei der Füllstandberechnung berücksichtigen.

Im Ergebnis weist das TDR-Füllstandmessgerät damit eine besonders hohe Genauigkeit auf.

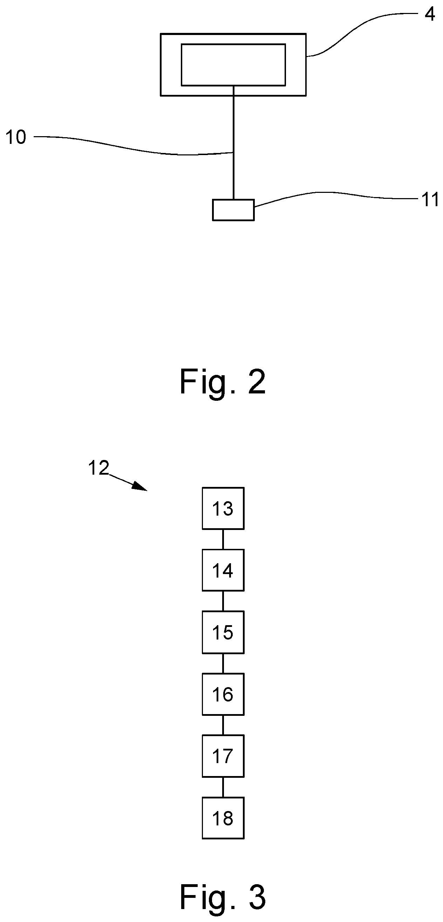

Fig. 2 zeigt einen Aufbau zur Messung der Abschwächung $\alpha_e$ durch die Elektronikeinheit 4. Die Elektronikeinheit 4 ist mit einem Kabel 10 zur Verlängerung der Messstrecke verbunden. Am Ende des Kabels 10 ist ein Reflexionselement 11 mit bekanntem Reflexionsfaktor angeordnet. Eine solche Verlängerung weist den Vorteil auf, dass der reflektierte Puls aufgrund einer längeren Laufzeit besser von dem ausgesendeten Messsignal zu unterscheiden ist.

Aus der Messung der Amplitude $A_S$ des ausgesendeten Messsignals und der Messung der Amplitude $A_R$ des am Ende des Kabels 10 reflektierten Messsignals kann unter Berücksichtigung des Einflusses des Kabels 10 die Abschwächung $\alpha_e$ bestimmt werden.

Fig. 3 zeigt ein Ausführungsbeispiel eines Verfahrens 12 zum Betreiben eines TDR-Füllstandmessgeräts 1.

In einem ersten Schritt 13 wird die Abschwächung $\alpha_e$ durch die Elektronikeinheit 4 wie oben beschrieben bestimmt und in der Elektronikeinheit 4 hinterlegt.

In einem nächsten Schritt 14 wird die Abschwächung $\alpha_m$, die durch das Prozessanschlusselement 5 verursacht wird, bestimmt. Der Wert der Abschwächung $\alpha_m$ entspricht einem Mittelwert, der in vorbereitenden Schritten für eine Mehrzahl von unterschiedlichen Prozessanschlusselementen aufgenommen wurde.

Aus den Werten für die Abschwächung $\alpha_e$ und $\alpha_m$ wird in Schritt 15 durch Multiplikation die Abschwächung $\alpha_0$ im Messumformer bestimmt.

Nach der vollständigen Montage des Messumformers 3 und der Anordnung des Füllstandmessgeräts 1 an einem Behälter 7, wird in einem nächsten Schritt 16 das Impedanzverhältnis $IFR_0$ bestimmt, wobei der Behälter 7 leer ist und insofern das gasförmige Medium 9, das die Sonde 2 umgibt, Luft mit einer Permittivität $\varepsilon_r$ ungefähr 1 ist.

Das so bestimmte Impedanzverhältnis $IFR_0$ wird ebenso in der Elektronikeinheit 4 hinterlegt.

Während des Betriebs des TDR-Füllstandmessgeräts 1 kann nun basierend auf den zuvor bestimmten und gespeicherten Werten die relative Permittivität $\varepsilon_r$ des gasförmigen Mediums 9, das oberhalb des Prozessmediums 8 angeordnet ist, bestimmt werden.

Hierzu wird die Amplitude $A_S$ eines von der Elektronikeinheit 4 erzeugten Messsignals und die Amplitude $A_R$ eines an der Grenzfläche zum Behälter 7 reflektierten Messsignals in Schritt 17 erfasst.

Aus der hinterlegten Abschwächung $\alpha_0$, dem hinterlegten Impedanzverhältnis $IFR_0$ und dem gemessenen Amplitudenverhältnis $A_R/A_S$ kann in einem nächsten Schritt 18 die relative Permittivität $\varepsilon_r$ des gasförmigen Mediums 9 oberhalb des Prozessmediums 8 bestimmt werden.

Die bestimmte Permittivität $\varepsilon_r$ wird bei der Laufzeitbestimmung und insofern bei der Füllstandbestimmung berücksichtigt.

Das dargestellte Verfahren 12 weist insofern den Vorteil auf, dass Änderungen von Prozessbedingungen, die sich auf die Ausbreitungsgeschwindigkeit des Messsignals im Behälter 7 auswirken, berücksichtigt werden, sodass insgesamt die Genauigkeit der Füllstandbestimmung verbessert werden kann.

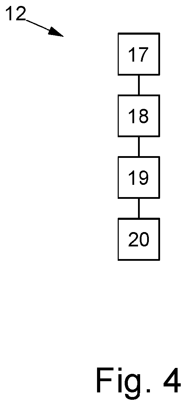

Fig. 4 zeigt ein Ausführungsbeispiel eines Verfahrens 12 zur Bestimmung des Füllstandes unter Berücksichtigung der Bestimmung der relativen Permittivität $\varepsilon_r$.

In einem ersten Schritt 17 wird das Amplitudenverhältnis $A_R/A_S$ eines an dem Übergang zum Behälter 7 reflektierten Messsignals und einem von der Elektronikeinheit 4 erzeugten Messsignal bestimmt.

Aus dem Amplitudenverhältnis und den hinterlegten Werten für die Abschwächung $\alpha_0$ im Messumformer und dem Impedanzverhältnis $IFR_0$ wird in einem nächsten Schritt 18 der Wert der relativen Permittivität $\varepsilon_r$ des gasförmigen Mediums oberhalb des Prozessmediums bestimmt.

Anschließend wird die Laufzeit des an der Oberfläche des Prozessmediums reflektierten Messsignals unter Berücksichtigung der bestimmten relativen Permittivität des gasförmigen Mediums in Schritt 19 bestimmt.

Aus der gemessenen Laufzeit wird in einem nächsten Schritt 20 der Füllstand des Prozessmediums 8 bestimmt.

Aufgrund der Berücksichtigung der aktuellen relativen Permittivität $\varepsilon_r$ des gasförmigen Mediums oberhalb des Prozessmediums weist das dargestellte Verfahren eine besonders hohe Genauigkeit auf.

Bezugszeichen

1    Füllstandmessgerät

2    Sonde

3    Messumformer

4    Elektronikeinheit

5    Prozessanschlusselement

6    Flansch

7    Behälter

8    Prozessmedium

9    gasförmiges Medium

10    Kabel

11    Reflexionselement

12    Verfahren zum Betreiben eines TDR-Füllstandmessgeräts

13    Bestimmung der Abschwächung $\alpha_e$ durch die Elektronikeinheit

14    Bestimmung der Abschwächung $\alpha_m$, die durch das Prozessanschlusselement verursacht wird

15    Bestimmung der Abschwächung $\alpha_0$

16    Bestimmung des Impedanzverhältnisses

17    Erfassung der Amplituden $A_S$ und $A_R$

18    Bestimmung der relativen Permittivität $\varepsilon_r$ des gasförmigen Mediums

19    Bestimmung der Laufzeit des Messsignals unter Berücksichtigung von der relativen Permittivität $\varepsilon_r$

20    Bestimmung des Füllstandes des Prozessmediums

**Patentansprüche**

1. Verfahren (12) zum Betreiben eines TDR-Füllstandmessgeräts (1),

   wobei das TDR-Füllstandmessgerät (1) wenigstens eine Sonde (2) zur Führung eines elektromagnetischen Signals und einen Messumformer (3) aufweist,
   wobei der Messumformer (3) eine Elektronikeinheit (4) zur Erzeugung eines Messsignals und zur Auswertung eines reflektierten Messsignals und ein Prozessanschlusselement (5) aufweist,
   wobei der Messumformer (3) über das Prozessanschlusselement (5) an einen Behälter (7) angeschlossen ist,
   wobei in dem Behälter (7) zu vermessendes Prozessmedium (8) angeordnet ist und wobei oberhalb des Prozessmediums (8) ein gasförmiges Medium (9) angeordnet ist,
   wobei mittels Erfassen (17) und Auswerten der Amplitude $A_S$ eines von der Elektronikeinheit (4) ausgesendeten Messsignals und der Amplitude $A_R$ eines an der Grenzfläche des Prozessanschlusselementes (5) und dem Behälter (7) reflektierten Messsignals die relative Permittivität $\varepsilon_r$ des gasförmigen Mediums (9) bestimmt wird,
   **dadurch gekennzeichnet,**
   **dass** zur Bestimmung der relativen Permittivität $\varepsilon_r$ die Abschwächung $\alpha_0$ des ausgesendeten Messsignals durch den Messumformer (3) berücksichtigt wird, wobei zur Bestimmung der Abschwächung $\alpha_0$ die Abschwächung $\alpha_e$ durch die Elektronikeinheit (4) und die mechanische Abschwächung $\alpha_m$ durch das Prozessanschlusselement (5) bestimmt werden,
   und/oder
   **dass** zur Bestimmung der relativen Permittivität $\varepsilon_r$ das Impedanzverhältnis $IFR_0 = Z_{0\_Sonde}/Z_{MU}$ berücksichtigt wird, wobei $Z_{0\_Sonde}$ die Impedanz der Sonde (2) im Vakuum und $Z_{MU}$ die Impedanz des Messumformers (3) ist und wobei das Impedanzverhältnis $IFR_0$ in einem Referenzgas mit bekannter Permittivität $\varepsilon_r$ bestimmt wird.

2. Verfahren (12) nach Anspruch 1, **dadurch gekennzeichnet, dass** die Abschwächung $\alpha_e$ des Messumformers (3) gemessen wird, wobei zur Messung der Abschwächung $\alpha_e$ ein Reflektor (11) an den Ausgang der Elektronikeinheit (4) platziert wird und wobei $\alpha_e$ durch den Vergleich der Amplitude eines von der Elektronikeinheit (4) ausgesendeten Messsignals $A_{eS}$ und eines an dem Reflektor (11) reflektierten Messsignals $A_{eR}$ bestimmt wird.

3. Verfahren (12) nach Anspruch 1 oder 2, **dadurch gekennzeichnet, dass** die Signalleitung der Elektronikeinheit, über die das erzeugte Messsignal übertragen wird, zur Bestimmung von $\alpha_e$ mit einem Kabel (10), beispielsweise mit einem Koaxialkabel, verlängert wird und dass die Abschwächung $\alpha_e$ unter Berücksichtigung der Abschwächung des Messsignals durch das zusätzliche Kabel (10) bestimmt wird.

4. Verfahren (12) nach einem der Ansprüche 1 bis 3, **dadurch gekennzeichnet, dass** die Bestimmung von $\alpha_e$ während der Montage des Messumformers (3) erfolgt.

5. Verfahren (12) nach einem der Ansprüche 1 bis 4, **dadurch gekennzeichnet, dass** die Abschwächung $\alpha_m$ einem Durchschnittswert für das verwendete Prozessanschlusselement entspricht.

6. Verfahren (12) nach einem der Ansprüche 1 bis 5, **dadurch gekennzeichnet, dass** das Impedanzverhältnis $IFR_0$ in Luft, bestimmt wird.

7. Verfahren (12) nach einem der Ansprüche 1 bis 5, **dadurch gekennzeichnet, dass** das Impedanzverhältnis $IFR_0$ in einem anderen Medium als Luft bestimmt wird, wobei die relative Permittivität $\varepsilon_r$ des Mediums bekannt ist und wobei aus dem so bestimmten Impedanzverhältnis durch entsprechende Korrektur auf das Impedanzverhältnis $IFR_0$ geschlossen wird.

8. Verfahren (12) nach einem der Ansprüche 1 bis 7, **dadurch gekennzeichnet, dass** die relative Permittivität $\varepsilon_r$ des gasförmigen Mediums (9) nach folgender Formel bestimmt wird:

$$\varepsilon_r = \left( \frac{Z_{0\_Sonde}}{Z_{MU}} \cdot \frac{\alpha_0 - \dfrac{A_R}{A_S}}{\alpha_0 + \dfrac{A_R}{A_S}} \right)^2 = \left( IFR_0 \cdot \frac{\alpha_0 - \dfrac{A_R}{A_S}}{\alpha_0 + \dfrac{A_R}{A_S}} \right)^2 .$$

9. Verfahren (12) nach Anspruch 8, wobei in der Bestimmung der relativen Permittivität $\varepsilon_r$ die Abschwächung $\alpha_0 = \alpha_e \cdot \alpha_m$ ist.

10. Verfahren (12) nach einem der Ansprüche 1 bis 9, dass die bestimmte relative Permittivität $\varepsilon_r$ bei der Auswertung der Laufzeit eines an der Oberfläche des Prozessmediums (8) reflektierten Messsignals berücksichtigt wird.

11. Verfahren (12) nach einem der Ansprüche 1 bis 10, **dadurch gekennzeichnet, dass** die relative Permittivität $\varepsilon_r$ in regelmäßigen oder unregelmäßigen Abständen durch Messung des Amplitudenverhältnisses $A_R/A_S$ neu bestimmt wird.

12. Verfahren (12) nach einem der Ansprüche 1 bis 11, **dadurch gekennzeichnet, dass** bei der Bestimmung der relativen Permittivität $\varepsilon_r$ ebenfalls die Temperatur der Elektronikeinheit und/oder des Prozessanschlusselementes berücksichtigt wird und dass bei einer Änderung der Temperatur der Elektronikeinheit und/oder des Prozessanschlusselementes der Wert der Abschwächung $\alpha_0$ angepasst wird.

13. TDR-Füllstandmessgerät (1) mit wenigstens einer Sonde (2) zur Führung eines elektromagnetischen Signals und mit einem Messumformer (3),

wobei der Messumformer (3) eine Elektronikeinheit (4) zur Erzeugung eines Messsignals und zur Auswertung eines reflektierten Messsignals und ein Prozessanschlusselement (5) aufweist,
wobei der Messumformer (3) über das Prozessanschlusselement (5) an einen Behälter (7) angeschlossen werden kann,
**dadurch gekennzeichnet,**
**dass** die Elektronikeinheit (4) zur Durchführung eines Verfahrens (12) nach einem der Ansprüche 1 bis 12 ausgebildet und eingerichtet ist.

**Claims**

1. Method (12) for operating a TDR level measuring device (1),

wherein the TDR level measuring device (1) comprises at least one probe (2) for guiding an electromagnetic signal and a measuring transducer (3),
wherein the measuring transducer (3) comprises an electronic unit (4) for generating a measuring signal and for evaluating a reflected measuring signal and a process connection element (5),
wherein the measuring transducer (3) is connected to a container (7) via the process connection element (5),
wherein process medium (8) to be measured is arranged in the container (7) and wherein a gaseous medium (9) is arranged above the process medium (8),
wherein the relative permittivity $\varepsilon_r$ of the gaseous medium (9) is determined by means of capturing (17) and evaluating the amplitude $A_S$ of a measuring signal emitted by the electronic unit (4) and the amplitude $A_R$ of a measuring signal reflected at the interface of the process connection element (5) and the container (7),
**characterized in**
**that**, in order to determine the relative permittivity $\varepsilon_r$, the attenuation $\alpha_0$ of the emitted measuring signal by the measuring transducer (3) is taken into account, wherein, in order to determine the attenuation $\alpha_0$, the attenuation $\alpha_e$ by the electronics unit (4) and the mechanical attenuation $\alpha_m$ by the process connection element (5) are determined
and/or
**that**, in order to determine the relative permittivity $\varepsilon_r$, the impedance ratio $IFR_0 = Z_{0\_probe}/Z_{MU}$ is taken into account, wherein $Z_{0\_probe}$ is the impedance of the probe (2) in a vacuum and $Z_{MU}$ is the impedance of the measuring transducer (3), and wherein the impedance ratio $IFR_0$ is determined in a reference gas with known permittivity $\varepsilon_r$.

2. Method (12) according to claim 1, **characterized in that** the attenuation $\alpha_e$ of the measuring transducer (3) is measured, wherein a reflector (11) is placed at the output of the electronic unit (4) for measuring the attenuation $\alpha_e$ and wherein $\alpha_e$ is determined by comparing the amplitude of a measuring signal $A_{eS}$ emitted by the electronic unit (4) and a measuring signal $A_{eR}$ reflected at the reflector (11).

3. Method (12) according to claim 1 or 2, **characterized in that** the signal line of the electronic unit, via which the generated measuring signal is transmitted, is extended with a cable (10), for example with a coaxial cable, for the determination of $\alpha_e$, and that the attenuation $\alpha_e$ is determined taking into account the attenuation of the measuring signal by the additional cable (10).

4.  Method (12) according to any one of claims 1 to 3, **characterized in that** the determination of $\alpha_e$ is carried out during the assembly of the measuring transducer (3).

5.  Method (12) according to any one of claims 1 to 4, **characterized in that** the attenuation $\alpha_m$ corresponds to an average value for the process connection element used.

6.  Method (12) according to any one of claims 1 to 5, **characterized in that** the impedance ratio $IFR_0$ is determined in air.

7.  Method (12) according to any one of claims 1 to 5, **characterized in that** the impedance ratio $IFR_0$ is determined in a medium other than air, wherein the relative permittivity $\varepsilon_r$ of the medium is known and wherein the impedance ratio $IFR_0$ is inferred from the impedance ratio thus determined by appropriate correction.

8.  Method (12) according to any one of claims 1 to 7, **characterized in that** the relative permittivity $\varepsilon_r$ of the gaseous medium (9) is determined according to the following formula:

$$\varepsilon_r = \left( \frac{Z_{0\_probe}}{Z_{MU}} \cdot \frac{\alpha_0 - \frac{A_R}{A_S}}{\alpha_0 + \frac{A_R}{A_S}} \right)^2 = \left( IFR_0 \cdot \frac{\alpha_0 - \frac{A_R}{A_S}}{\alpha_0 + \frac{A_R}{A_S}} \right)^2$$

9.  Method (12) according to claim 8, wherein in the determination of the relative permittivity $\varepsilon_r$ the attenuation is $\alpha_0 = \alpha_e \cdot \alpha_m$.

10. Method (12) according to any one of claims 1 to 9, in that the determined relative permittivity $\varepsilon_r$ is taken into account in the evaluation of the transit time of a measuring signal reflected at the surface of the process medium (8).

11. Method (12) according to any one of claims 1 to 10, **characterized in that** the relative permittivity $\varepsilon_r$ is redetermined at regular or irregular intervals by measuring the amplitude ratio $A_R/A_S$.

12. Method (12) according to any one of claims 1 to 11, **characterized in that** the temperature of the electronics unit and/or of the process connection element is also taken into account when determining the relative permittivity $\varepsilon_r$, and that the value of the attenuation $\alpha_0$ is adjusted in the event of a change in the temperature of the electronics unit and/or of the process connection element.

13. TDR level measuring device (1) with at least one probe (2) for guiding an electromagnetic signal and with a measuring transducer (3),

    wherein the measuring transducer (3) has an electronic unit (4) for generating a measuring signal and for evaluating a reflected measuring signal and a process connection element (5),
    wherein the measuring transducer (3) can be connected to a container (7) via the process connection element (5),
    **characterized in**
    **that** the electronic unit (4) is designed and set up to perform a method (12) according to any one of claims 1 to 12.

**Revendications**

1.  Procédé (12) de fonctionnement d'un appareil de mesure de niveau de remplissage TDR (1),

    l'appareil de mesure de niveau de remplissage TDR (1) comportant au moins une sonde (2) destinée à guider un signal électromagnétique, et un transducteur de mesure (3),
    le transducteur de mesure (3) comportant une unité électronique (4) destinée à générer un signal de mesure et à évaluer un signal de mesure réfléchi, et un élément de raccordement de traitement (5).

le transducteur de mesure (3) étant raccordé à un récipient (7) par l'intermédiaire de l'élément de raccordement de traitement (5),

le milieu de traitement (8) à mesurer étant disposé dans le récipient (7) et un milieu gazeux (9) étant disposé au-dessus du milieu de traitement (8),

la permittivité relative $\varepsilon_r$ du milieu gazeux (9) étant déterminée par détection (17) et évaluation de l'amplitude $A_S$ d'un signal de mesure émis par l'unité électronique (4) et de l'amplitude $A_R$ d'un signal de mesure réfléchi sur l'interface de l'élément de raccordement de traitement (5) et sur le récipient (7), **caractérisé**

**en ce que** l'atténuation $\alpha_0$ du signal de mesure émis est prise en compte par le transducteur de mesure (3) pour déterminer la permittivité relative $\varepsilon_r$, l'atténuation $\alpha_e$ étant déterminée par l'unité électronique (4) et l'atténuation mécanique $\alpha_m$ étant déterminée par l'élément de raccordement de traitement (5) pour déterminer l'atténuation $\alpha_0$,

et/ou

**en ce que** le rapport d'impédance $IFR_0 = Z_{0\_Sonde}/Z_{MU}$ est pris en compte pour déterminer la permittivité relative $\varepsilon_r$, $Z_{0\_Sonde}$ étant l'impédance de la sonde (2) dans le vide et $Z_{MU}$ étant l'impédance du transducteur de mesure (3), et le rapport d'impédance $IFR_0$ étant déterminé dans un gaz de référence de permittivité $\varepsilon_r$ connue.

2. Procédé (12) selon la revendication 1, **caractérisé en ce que** l'atténuation $\alpha_e$ du transducteur de mesure (3) est mesurée, un réflecteur (11) étant placé à la sortie de l'unité électronique (4) pour mesurer l'atténuation $\alpha_e$, et $\alpha_e$ étant déterminé par comparaison de l'amplitude d'un signal de mesure $A_{eS}$ émis par l'unité électronique (4) et d'un signal de mesure $A_{eR}$ réfléchi sur le réflecteur (11).

3. Procédé (12) selon la revendication 1 ou 2, **caractérisé en ce que** la ligne de signal de l'unité électronique, par l'intermédiaire de laquelle le signal de mesure généré est émis, est prolongée par un câble (10) pour déterminer $\alpha_e$, par exemple par un câble coaxial, et **en ce que** l'atténuation $\alpha_e$ est déterminée en tenant compte de l'atténuation du signal de mesure par le câble supplémentaire (10).

4. Procédé (12) selon l'une quelconque des revendications 1 à 3, **caractérisé en ce que** la détermination de $\alpha_e$ est effectuée lors du montage du transducteur de mesure (3).

5. Procédé (12) selon l'une quelconque des revendications 1 à 4, **caractérisé en ce que** l'atténuation $\alpha_m$ correspond à une valeur moyenne pour l'élément de raccordement de traitement utilisé.

6. Procédé (12) selon l'une quelconque des revendications 1 à 5, **caractérisé en ce que** le rapport d'impédance $IFR_0$ dans l'air est déterminé.

7. Procédé (12) selon l'une quelconque des revendications 1 à 5, **caractérisé en ce que** le rapport d'impédance $IFR_0$ est déterminé dans un milieu autre que l'air, la permittivité relative $\varepsilon_r$ du milieu étant connue et le rapport d'impédance $IFR_0$ étant déduit du rapport d'impédance ainsi déterminé par une correction appropriée.

8. Procédé (12) selon l'une quelconque des revendications 1 à 7, **caractérisé en ce que** la permittivité relative $\varepsilon_r$ du milieu gazeux (9) est déterminée selon la formule suivante :

$$\varepsilon_r = \left( \frac{Z_{0\_Sonde}}{Z_{MU}} \cdot \frac{\alpha_0 - \dfrac{A_R}{A_S}}{\alpha_0 + \dfrac{A_R}{A_S}} \right)^2 = \left( IFR_0 \cdot \frac{\alpha_0 - \dfrac{A_R}{A_S}}{\alpha_0 + \dfrac{A_R}{A_S}} \right)^2 .$$

9. Procédé (12) selon la revendication 8, dans lequel, dans la détermination de la permittivité relative $\varepsilon_r$, l'atténuation est $\alpha_0 = \alpha_e \cdot \alpha_m$.

10. Procédé (12) selon l'une quelconque des revendications 1 à 9, **caractérisé en ce que** la permittivité relative $\varepsilon_r$ déterminée est prise en compte lors de l'évaluation du temps de propagation d'un signal de mesure réfléchi sur la surface du milieu de traitement (8).

11. Procédé (12) selon l'une quelconque des revendications 1 à 10, **caractérisé en ce que** la permittivité relative $\varepsilon_r$ est déterminée à nouveau à intervalles réguliers ou irréguliers par mesure du rapport d'amplitude $A_R/A_S$.

**12.** Procédé (12) selon l'une quelconque des revendications 1 à 11, **caractérisé en ce que** la température de l'unité électronique et/ou de l'élément de raccordement de traitement est également prise en compte lors de la détermination de la permittivité relative $\varepsilon_r$ et **en ce que** la valeur de l'atténuation $\alpha_0$ est ajustée en cas de modification de la température de l'unité électronique et/ou de l'élément de raccordement de traitement.

**13.** Dispositif de mesure de niveau de remplissage TDR (1) comportant au moins une sonde (2) destinée à guider un signal électromagnétique, et un transducteur de mesure (3),

le transducteur de mesure (3) comportant une unité électronique (4) destinée à générer un signal de mesure et à évaluer un signal de mesure réfléchi, et un élément de raccordement de traitement (5),
le transducteur de mesure (3) pouvant être raccordé à un récipient (7) par l'intermédiaire de l'élément de raccordement de traitement (5),
**caractérisé**
**en ce que** l'unité électronique (4) est conçue pour mettre en œuvre un procédé (12) selon l'une quelconque des revendications 1 à 12.

Fig. 1

4

10

11

# Fig. 2

12

13

14

15

16

17

18

# Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017108702 A1